# EUROPEAN PATENT APPLICATION

(11) **EP 1 005 796 A1**
(43) Date of publication of application: **07.06.2000**
(21) Application number: 99204079.0
(22) Date of filing: 02.12.1999
(51) Int. Cl.: A23L 1/216, A23L 1/212

(54) **Method and device for preparing puree**

(30) Priority: 03.12.1998 NL 1010714
(71) Applicant: Agrico Coöperatieve Handelsvereniging voor Akkerbouwgewassen b.a., 8300 AB Emmeloord (NL)
(72) Inventor: Dalhuisen, Peter, 8167 NC Oene (NL)
(74) Representative: Hooiveld, Arjen Jan Winfried

(57) **Abstract**

A method for preparing puree from products such as potatoes, comprising the steps of cutting the products, which may or may not be peeled, into pieces, cooking said pieces and, following that, mashing said pieces, after which the puree is heated, in particular pasteurized, prior to being filled into the package. Possibly, said separating/screening step and said mashing step are carried out simultaneously.

## Description

The present invention relates to a method for preparing puree from products such as fruits, plants, in particular tubers, for example potatoes, comprising the steps of:
a. cutting the products into pieces, which may or may not be peeled,
b. cooking said pieces,
c. mashing ("pureeing") said pieces,
d. filling said puree into a package.

The invention furthermore relates to a product prepared by using said method, as well as to a device for carrying out said method.

A method of this kind is known from European patent No. EP-A-0086185 in the name of Fjälkinge Potato Processing Machinery AB. Said patent discloses in particular a method for the production of concentrated, frozen puree, in particular potato puree, in which method the potatoes are washed, peeled, cut into pieces, such as cubes, blanched, cooled, dewatered dried so that their weight is reduced by 40-60%, steamed, mashed, and finally frozen and crushed.

One drawback of the method known from the aforesaid European patent specification is the fact that the puree thus prepared is not fresh, seeing the fact that the potatoes are dried and frozen. Although it would be possible with the prior art method to dispense with chemical additives such as antioxidants, consistency agents etc., it has the additional drawback that it comprises a great many processing steps, whilst furthermore relatively much energy is required, in particular for cooling, drying, steaming, freezing etc.

The object of the invention is to provide a method and a device for preparing fresh puree which exhibits optimum properties as regards shelf life and quality, without said method being time-consuming and requiring a great deal of energy.

In order to accomplish that objective, a method according to the invention is characterized in that the puree is heated, in particular pasteurized, prior to being filled into the package. As a result, the puree is fresh and will keep well, whilst it is packaged without a great number of processing steps being required. Especially the risk of contamination, in particular contamination after the mashing step, is strongly reduced, since pasteurization, preferably carried out at a temperature of more than 75 °C, in particular 80 - 90 °C, more in particular about 85 °C, will kill all germs/organisms causing decay that may be present in the puree, so that puree thus prepared and preferably hermetically packed appears to keep as long as at least ten days. In another preferred variant, the puree is not hermetically packed, but it is packed in a package which also contains an inert gas. Experiments have shown that the period during which the aforesaid pasteurization takes place preferably ranges between 1.5 and 4 minutes, in particular between 2 and 2.5 minutes.

In one embodiment of a method according to the invention, the puree is cooled between said pasteurization and said filling, in particular to a temperature ranging between 0 °C and 4 °C, preferably about 2 °C. The purpose of said cooling step is to reduce the growth of organisms causing decay which have not been killed, in particular during the filling and storage of the finished product.

In another embodiment of a method according to the invention, the puree is mixed with a mixture of flavourings prior to being pasteurized. This mixture of flavourings, also referred to as "coll" or "premix" by specialists, which contains salt, herbs and fat in order to give the eventual finished product sufficient flavour, has a solidification temperature below 2 °C, preferably below 0 °C, in order to achieve that the mixture of flavourings is homogeneously present in solid form in the puree after the above-indicated cooling step.

In another embodiment of a method according to the invention, the pieces are pureed in heated condition, which is easier and consequently requires even less energy.

In another embodiment of a method according to the invention, a separating/screening step is carried out between steps b and c, at least if the pieces are not peeled, in order to separate the cooked pieces from peel remnants and/or hardened, damaged portions. The advantage of this is that, now that a separating step is carried out following said cooking step, the amount of waste that is produced will decrease, because when peeling takes place in advance, the amount of product that adheres to the peel will be larger than when the product is separated after the cooking step, which applies in particular when said separating or screening step is carried out while the product is warm. The cost price of the finished product is thus reduced, because eventually less money needs to be added for the transport and the processing of a reduced amount of waste.

In yet another embodiment of a method according to the invention, said separating/screening step and said mashing step are carried out simultaneously, which strongly reduces the time required for carrying out the method.

Yet another embodiment of a method according to the invention aims at carrying out said mashing, possibly said separating/screening and said filling while using the heat which is produced in step b, that is, during the cooking step. As a result of this, the method is very economical and requires little energy, because the heat which is produced in one step is efficiently utilized during subsequent steps, whilst furthermore little energy is required because no cooling, (dry) freezing and/or heating takes place between the various steps. In addition, the time required for carrying out the method is strongly reduced, as a result of which the risk of contamination while the method is being carried out is reduced.

In another embodiment, a steaming/cooking method is carried out in step b, in order to obtain a sufficiently dry product in step b, and in order to prevent unnecessary loss of flavour, weight and vitamins.

Preferably, said steaming/cooking method is carried out at a temperature of minimally 80 °C for at least 12 minutes, because the product has been so heated in step b that in case of an average time cycle for the steps that follow, the puree can eventually be filled at the required minimum temperature of 75 °C. Said steaming/cooking method is carried out at a temperature of 85 - 95 °C, preferably at 90 °C, in order to obtain optimum results.

In order to obtain uniform cooking of the pieces in step b, the pieces obtained in step b are slices, segments, cubes or blocks cut or chopped to approximately the same size.

Another embodiment of the method according to the invention makes it possible to form and pack and the puree in a form as desired by the consumer, for example in the form of a sausage, a doughnut, a cylinder or a package. In particular, the product can be given the shape of a sausage by packing it in plastic gut. In another preferred variant, the puree is packaged in a large size pack, for example in the form of puree bags collected in a box.

The invention also relates to a device for carrying out the above-described method, wherein the device is built up of a cutting or chopping apparatus which is connected to a steam cooking apparatus, which device according to the invention is characterized in that said steam cooking apparatus is connected to a continuously operating separating/mashing screen.

The advantage of the device is that it can to a large extent be operated continuously when using the method according to the invention. In a further special embodiment of a device according to the invention, the screen mesh of said separating/mashing screen depends on the variety of the product, the degree to which it is cooked and/or the desired structure of the end product, wherein any desired structure of the end product can be achieved by suitably selecting the screen mesh.

In order to prevent partial cooling of the product to be packed as much as possible, the device according to the invention preferably includes a pasteurizing apparatus connected to said separating/mashing screen, which pasteurizing apparatus is connected, whether or not via a refrigerating apparatus, to a (vacuum) filling plant.

The steam cooking apparatus is preferably a heat-hold blancher.

The present invention and its further concomitant advantages will now be explained in more detail with reference to the accompanying drawing. In the drawing:

Figure 1 is a schematic diagram showing the method steps, which serves to explain the method according to the invention.

Figure 2 is a schematic diagram of the device for carrying out the method of Figure 1.

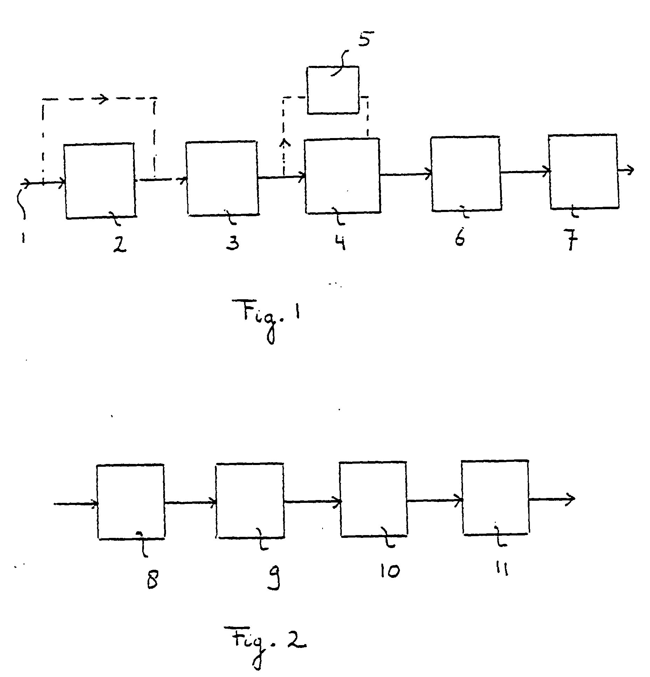

Figure 1 shows a diagram wherein products such as fruits, plants, in particular roots or tubers, with potatoes as a well-known exponent thereof, but for example also kohlrabi, Swedish turnips, roots, etc., which are to be formed into a puree, are supplied at 1. Said product is peeled (cut into pieces) at 2, whereby it is also possible, however, to skip step 2, which is indicated by means of a dotted line. Following that, the cut or chopped pieces, which may or may not be peeled, are cooked at 3, which step is preferably carried out by steaming/cooking at a temperature of at least 80 °C for at least twelve minutes. Said steaming/cooking is usually carried out at a temperature of 85 - 95 °C, and preferably, in order to obtain optimum results, at a temperature of 90 °C. Following that, the cooked pieces are pureed in step 4, which preferably takes place while the product is hot, because this requires less energy. In accordance with a further preferred method, separating/screening takes place in step 5 prior to said mashing in step 4, in particular when step 2 has been skipped. Irrespective of whether peeling has taken place in step 2, said separating/screening and said mashing can take place simultaneously, that is, in step 4 in this case. Following said mashing step, the puree is pasteurized in step 6 at a temperature of about 85 °C, which minimizes the risk of subsequent contamination. Subsequent contamination may furthermore be prevented by cooling the pasteurized puree to a temperature of about 2 °C in order to obtain optimum results, which is indicated at 7. In accordance with a further preferred embodiment, said cooling takes place by cooling the pasteurized puree omnilaterally while rotating it, wherein a cooler consisting of an inner wall and an outer wall to be cooled is used, within which the pasteurized puree is cooled while being rotated. Following that, the puree can be packed, for example in the shape of a sausage, a doughnut, a cylinder or a package. When the product is packed in the shape of a sausage, it is preferably packed in plastic gut, which is thus directly ready for sale to the consumer. The steaming/cooking method is preferably carried out by means of saturated steam. Preferably, the puree is mixed with the aforesaid "coll" or "premix" between mashing step 4 and pasteurizing step 6.

Figure 2 shows the device for carrying out the method, wherein the device is built up of a cutting or chopping apparatus 8, which is connected to a steaming/cooking apparatus 9, for example a heat/hold blancher, which is in turn connected to a separating/mashing screen 10, which preferably operates continuously in order to make it possible to carry out the method as quickly as possible. The screen mesh of the mashing screen is adapted to the end product, and it will generally depend inter alia on the variety, the degree of cooking and/or the desired structure of the end product. Connected to the mashing screen is a pasteurizing apparatus 11, which kills any germs that are present in the puree.

Uniform cooking in step b is obtained by forming pieces of approximately the same size in step a. It does not matter thereby whether the pieces are cut or chopped, or whether they are cut or chopped in the form of segments, cubes or blocks or the like.

## Claims

1. A method for preparing puree from products such as fruits, plants, in particular tubers, for example potatoes, comprising the steps of:
a. cutting the products into pieces, which may or may not be peeled,
b. cooking said pieces,
c. mashing said pieces,
d. filling said puree into a package,
characterized in that the puree is heated, in particular pasteurized, prior to being filled into the package.

2. A method according to claim 1, wherein the puree is pasteurized at a temperature of more than 75 °C, in particular at a temperature ranging between 80 °C and 90 °C.

3. A method according to claim 1 or 2, wherein the puree is cooled between said pasteurization and said filling, in particular to a temperature ranging between 0 °C and 4 °C, preferably about 2 °C.

4. A method according to claim 1, 2 or 3, wherein the puree is mixed with a mixture of flavourings prior to being pasteurized.

5. A method according to claim 4, wherein said mixture of flavourings has a solidification temperature below 2 °C, preferably below 0 °C.

6. A method according to any one of the preceding claims 1 - 5, wherein said pieces are pureed in heated condition.

7. A method according to any one of the preceding claims 1 - 6, wherein a separating/screening step is carried out between steps b and c, at least if the pieces are not peeled, in order to separate the cooked pieces from peel remnants and/or hardened, damaged portions.

8. A method according to any one of the preceding claims 1 - 7, wherein said separating/screening step and said mashing step are carried out simultaneously.

9. A method according to any one of the preceding claims 1 - 8, wherein said mashing, possibly said separating/screening and said filling are carried out while using the heat which is produced in step b.

10. A method according to any one of the preceding claims 1 - 9, wherein a steaming/cooking method is used in step b.

11. A method according to claim 10, wherein said steaming/cooking method is carried out at a temperature of minimally 80 °C for at least 12 minutes.

12. A method according to claim 10 or 11, wherein said steaming/cooking method is carried out at a temperature of 85 - 95 °C, preferably at 90 °C.

13. A method according to any one of the preceding claims 1 - 12, wherein the pieces obtained in step b are slices, segments, cubes or blocks cut or chopped to approximately the same size.

14. A method according to any one of the preceding claims 1 - 13, wherein the puree is packed in the form of a sausage, a doughnut, a cylinder or a package.

15. A product prepared by using the method according to any one of the preceding claims 1 - 14.

16. A product according to claim 15, wherein the product is packed in a flexible package, more in particular in plastic gut.

17. A product according to claim 15 or 16, wherein said product is deep-frozen.

18. A device for carrying out the method according to any one of the preceding claims 1 -14, wherein said device is built up of a cutting or chopping apparatus which is connected to a steam cooking apparatus, which can be connected to a continuously operating separating/mashing screen.

19. A device according to claim 18, wherein the screen mesh of said separating/mashing screen depends on the variety of the product, the degree to which it is cooked and/or the desired structure of the end product.

20. A device according to claim 18 or 19, wherein said device includes a pasteurizing apparatus connected to said separating/mashing screen, which pasteurizing apparatus is connected, whether or not via a refrigerating apparatus, to a filling plant, in particular a vacuum filling plant.

21. A device according to claim 18, 19 or 20, wherein said steam cooking apparatus is a heat-hold blancher.
